# EUROPÄISCHE PATENTSCHRIFT

(11) **EP 1 628 376 B1**
(45) Veröffentlichungstag und Bekanntmachung des Hinweises auf die Patenterteilung: **13.05.2009**
(21) Anmeldenummer: 05018101.5
(22) Anmeldetag: 19.08.2005
(51) Int. Cl.: H02G 3/18, H02G 3/22, F16L 5/08

(54) **Montageteil für eine flüssigkeitsdichte Kabeldurchführung**
Assembly part for a sealed cable feedthrough
Pièce de montage pour une traversée de câbles étanche

(30) Priorität: 19.08.2004 DE 102004040293; 19.08.2004 US 602700 P
(43) Veröffentlichungstag der Anmeldung: 22.02.2006
(73) Patentinhaber: Airbus Deutschland GmbH, 21129 Hamburg (DE)
(72) Erfinder: Motzigkeit, Daniel, 22559 Hamburg (DE)
(74) Vertreter: Kopf, Korbinian Paul

(56) Entgegenhaltungen:
- WO-A-97/42693
- DE-U1- 29 723 073
- US-A- 5 235 138

## Beschreibung

Die Erfindung betrifft ein Montageteil für eine flüssigkeitsdichte Kabeldurchführung durch hintergreifbare feste Flächen. Als feste Flächen sind dabei unter anderem verschiedene freitragende Wand-, Decken- oder Bodenstrukturen sowie andere raumteilende Begrenzungs- und Installationselemente zu sehen. Erfindungsgemäße Montageteile können bevorzugt überall dort zum Einsatz kommen, wo eine schnelle Montage der Kabeldurchführung bei sicherer Gewährleistung einer ausreichenden Dichtwirkung und Zugentlastung im Vordergrund steht.

Einsatzbeispiele für derartige Montageteile finden sich im Flugzeugbau, wo neben der Erfüllung erhöhter Sicherheitsanforderungen insbesondere eine effektive Gewichtseinsparung besondere Bedeutung erlangt.

Bei der Kabelinstallation in Flugzeugen können durch eine Installation unter Nutzung von Kabeldurchführungen zum Teil erhebliche Reduzierungen der erforderlichen Kabellängen verwirklicht werden. Allerdings werden meist hohe Anforderungen an die Kabeldurchführung selbst gestellt.

Die Nutzung von Kabeldurchführungen erschließt zusätzlich zur spantnahen Verlegung verschiedener Kabel häufig neue Verlegewege, was mit einer Änderung der Kabelbefestigung verbunden sein kann. Oft wird die Kabeldurchführung selbst die Aufgabe eines Befestigungsmittels für zu verlegende Kabel übernehmen müssen.

Besonders anschaulich können die Anforderungen an eine Kabeldurchführung am Beispiel der Versorgungsleitungen für Küchengeräte in Bordküchen verdeutlicht werden. Mehrere Bordküchen sind typischerweise in zentralen Bereichen des Flugzeugrumpfes angeordnet. Es ist üblich, Küchenversorgungskabel, die auf Grund hoher erforderlicher Versorgungsströme vergleichsweise große Leitungsquerschnitte aufweisen, gebündelt als Adapterkabel auszulegen. Derartige Adapterkabel verbinden einzelne Verteiler miteinander. Ein bevorzugter Ort für die Unterbringung von Zentralverteilern befindet sich im Bereich der Querträger im Innern des Rumpfes. Die Bordküchen verfügen über einen eigenen Verteiler. Dieser ist bisher meist über der Decke der Bordküche angeordnet, um ausgehend von diesem Küchenverteiler, alle Versorgungsleitungen für die einzelnen Küchengeräte durch die Küchendecke an die Geräte zu führen. Das hat zwar den Vorteil, dass erforderliche Kabeldurchführungen im Deckenbereich nicht mit evtl. im Küchenbereich austretenden Flüssigkeiten verunreinigt werden und derartige Flüssigkeiten auch nicht in Installationsräume gelangen können. Dadurch wird die Gefahr flüssigkeitsbedingter Kurzschlüsse gering gehalten. Ein großer Nachteil dieses Verlegeprinzips besteht jedoch in den langen Verlegewegen, die teilweise zwischen Zentralverteiler und Küchenverteiler durch die schweren Adapterkabel zu überbrücken sind. Befindet sich beispielsweise ein Zentralverteiler im Querträgerbereich, über dem eine Küchenzelle angeordnet ist, so muss das Adapterkabel vom Zentralverteiler zur Aussenwand des Rumpfes, von dort zwischen den Spanten entlang der Aussenwand bis über die Küchenzelle und von dort zum Verteiler über der Decke der Küchenzelle geführt werden. Bei einem Gewicht der Adapterkabel von etwa 160 g bis über 300 g pro Meter bedeutet das ein erhebliches Gewicht durch die erforderlich werdenden Kabellängen. Durch Verwendung einer geeigneten Kabeldurchführung durch den Fussboden der Bordküche ließe sich für den Fall, dass der Küchenverteiler im unteren Bereich der Küchenzelle angeordnet würde, eine wesentliche Verringerung der Länge der Adapterkabel zwischen den Verteilern erzielen, was gleichzeitig mit einer entsprechenden Gewichtsreduzierung einherginge.

Um allerdings eine Kabeldurchführung an einem derartig sensiblen Ort einsetzen zu können, sind an die Ausführung der Kabeldurchführung bestimmte Anforderungen zu stellen.

Die Kabeldurchführung sollte keine hohen Anforderungen an die Montage stellen, insbesondere darf unter keinen Umständen die Gefahr einer Beschädigung einzelner Kabelbestandteile entstehen, da die möglicherweise damit verbundene Brandgefahr in Flugzeugen ein Sicherheitsrisiko erster Ordnung darstellen würde. Außerdem muss der Durchtritt von Flüssigkeiten durch die für die Kabeldurchführung genutzte Öffnung im Boden der Küche sicher verhindert werden. Diesem Aspekt kommt ebenfalls eine erhöhte Bedeutung zu, da einerseits im Küchenbereich durch den Umgang mit Speisen und Getränken ein Verschütten von Flüssigkeiten, beispielsweise in Folge von Turbulenzen, häufig zu erwarten sein wird, andererseits im Bereich von Querträgern direkt unter der Bordküche sicherheitsrelevante und flüssigkeitsempfindliche Installationen angeordnet sein können, die unbedingt vor einer ungewollten Einwirkung von Flüssigkeiten zu bewahren sind. Weiterhin ist zu berücksichtigen, dass sich die Eigenschaften der Kabeldurchführung auch unter für derartige Bauteile extremen Beschleunigungen nicht verändern dürfen. So müssen im Bereich der Kabeldurchführung zeitweise durch eine effektive Zugentlastung Kräfte aufgenommen werden, die ein Vielfaches der durch das eigentliche Kabelgewicht verursachten Belastungen betragen können. Sich eventuell lösende Gegenstände sollten keine Veränderungen am Sitz des installierten Kabels herbeiführen können. Ruckartige Belastungen während starker Turbulenzen sowie evtl. erforderlich werdender Notlandungen dürfen ebenfalls keine Veränderungen an den elektrischen Installationen hervorrufen, da gerade in solchen Augenblicken die volle Funktionsfähigkeit aller wichtigen Betriebssysteme stets gewährleistet sein muss. Außerdem darf eine Kabeldurchführung die Reinigung und Wartung des Flugzeuges nicht behindern.

DE 297 23 073 U1 betrifft eine Dichtungsvorrichtung zum abdichtenden Durchführen mindestens einer Leitung durch einen in einer Wand oder dergleichen ausgebildeten Durchbruch, insbesondere zur nachträglichen Montage an bestehenden Leitungen, mit einem verformbaren Dichtkörper, der eine Bohrung zur Aufnahme der Leitung und eine mit der Bohrung verbundene Trennfuge aufweist, so dass der verformbare Dichtkörper in einem Öffnungszustand auf die Leitung aufsetzbar ist, und mit einer Spanneinrichtung zum Verspannen des Dichtkörpers derart, dass dieser im verspannten Zustand abdichtend an die mindestens eine Leitung angepresst wird, wobei mindestens zwei in axialer Richtung der Leitung hintereinander angeordnete verformbare Dichtkörper vorgesehen sind und wobei die Trennfugen der Dichtkörper im montierten Zustand versetzt zueinander angeordnet sind.

Eine Aufgabe der vorliegenden Erfindung ist es eine Möglichkeit anzugeben, eine flüssigkeitsdichte Kabeldurchführung zu realisieren, die einen geringen Montageaufwand erfordert, für eine ausreichende Zugentlastung sorgt und den hohen Sicherheitsstandards im Flugzeugbau entspricht.

Gelöst wird die Aufgabe durch ein Montageteil mit den Merkmalen von Anspruch 1. Vorteilhafte Ausgestaltungen eines erfindungsgemäßen Montageteils zeigen die Unteransprüche 2 bis 14.

Eine Kabeldurchführung, die den eingangs beschriebenen Anforderungen genügt, wird mit einem erfindungsgemäßen Montageteil für eine flüssigkeitsdichte Kabeldurchführung durch hintergreifbare feste Flächen realisiert. Dieses umfasst einen Formkörper aus elastischem Material, der die für die jeweilige Kabeldurchführung vorgesehene Öffnung in der festen Fläche, also beispielsweise eine Bohrung im Fußboden einer Bordküche, zumindest nahezu vollständig ausfüllt. Durch den elastischen Formkörper führen Öffnungen zur Aufnahme der Kabel. Der elastische Formkörper weist einen Querschnitt auf, welcher etwa der Form der Öffnung für die Installation der Kabeldurchführung entspricht. Eine besonders einfache Montierbarkeit ergibt sich, wenn der Querschnitt des elastischen Formkörpers so gewählt wird, dass im entspannten Zustand des Formkörpers ein geringes Spiel zwischen dem in der Öffnung befindlichen Teil des Formkörpers und der Wand der Öffnung für die Installation der Kabeldurchführung verbleibt. Stirnseitig wird der elastische Formkörper durch zwei feste Platten begrenzt. Eine obere Begrenzungsplatte deckt die Öffnung für die Installation der Kabeldurchführung vollständig ab und ist so dimensioniert, dass sie auf dem Rand der Öffnung aufliegen kann. Eine untere Begrenzungsplatte weist einen Querschnitt auf, der etwas kleiner als der der Öffnung in der festen Fläche ist. Dadurch kann die untere Begrenzungsplatte bei einer Verformung des elastischen Formkörpers in der Öffnung bewegt werden. Besonders vorteilhaft ist es, die Begrenzungsplatten fest mit dem elastischen Formkörper zu verbinden.

Vor der unteren Begrenzungsplatte befindet sich eine Arretierungsplatte, die über Spannmittel mit der oberen Begrenzungsplatte verbunden ist. Eine vorteilhafte Ausgestaltung derartiger Spannmittel umfasst mindestens eine Schraube, die durch die Begrenzungsplatten, den elastischen Formkörper und die Arretierungsplatte hindurch reicht. Durch Anziehen der Schraube kann der Abstand zwischen der oberen Begrenzungsplatte und der Arretierungsplatte verändert werden. Dabei wirkt die untere Begrenzungsplatte wie ein Distanzstück zwischen der Arretierungsplatte und dem elastischen Formkörper, das für einen möglichst gleichmäßigen Krafteintrag in den elastischen Formkörper zu sorgen hat. Bei Verringerung des Abstandes zwischen der oberen Begrenzungsplatte und der Arretierungsplatte wird der elastische Formkörper zusammengepresst, wodurch sich seine Dicke verringert und sein Querschnitt erhöht. Dadurch wird seine Außenseite fest an die Wand der Durchführungsöffnung angepresst. Gleichzeitig entsteht ein Druck im Innern des elastischen Formkörpers, der dafür sorgt, dass ein fester Kontakt zwischen dem elastischen Formkörper und den durch ihn hindurchführenden Kabeln und gegenbenenfalls Spannmitteln entsteht. Auf diese Weise entfaltet der elastische Formkörper eine gute Dichtwirkung gegenüber an der Kabeldurchführung anliegenden Fluiden. Durch Wahl des Elastizitätsmoduls des Materials des elastischen Formkörpers und der vorgenommenen relativen Dickenänderung kann der die Dichtwirkung herbeiführende Anpressdruck auf einfach Weise an die jeweiligen Gegebenheiten angepasst werden.

Die Arretierungsplatte weist Abmessungen auf, die ein einfaches Durchstecken durch die Öffnung für die Kabeldurchführung erlauben. An ihren Außenrändern sind schwenkbare Riegel angebracht. Diese sind zumindest zwischen zwei Positionen schwenkbar, wobei eine Position eine Stellung der schwenkbaren Riegel bedingt, die das Durchstecken der Arretierungsplatte durch die Öffnung für die Kabeldurchführung nicht behindert und die andere Position derart über einen Anschlag festgelegt ist, dass die schwenkbaren Riegel die feste Fläche, durch die die Kabeldurchführung erfolgt, hintergreifen. Dadurch wird bei Anziehen der Spannmittel und der damit verbundenen Verringerung des Abstandes zwischen der Arretierungsplatte und der oberen Begrenzungsplatte ein Endanschlag realisiert, der die Deformation des elastischen Formkörpers begrenzt. Ein versehentliches Einstellen eines zu hohen Anpressdruckes am durchgeführten Kabel wird dadurch sicher ausgeschlossen, was zur Erhöhung der Montagesicherheit beiträgt. Werden die vorhandenen Spannmittel dennoch fester angezogen, als zur Erzielung der maximal vorgesehenen Deformation des elastischen Formkörpers vorgesehen ist, so werden zusätzlich auftretende Kräfte über die obere Begrenzungsplatte und die in Anschlagsposition befindlichen schwenkbaren Riegel direkt in die feste Fläche eingetragen, durch welche die Kabeldurchführung erfolgt. Das gesamte Montageteil kann auf diese Weise wesentlich fester in der Öffnung der Durchführung angebracht werden, als das durch Ausnutzung eines den durchgeführten Kabeln zuträglichen Anpressdruckes möglich wäre.

Erfindungsgemäße Montageteile realisieren eine Kombination aus kraft- und formschlüssiger Befestigung. Die durchgeführten Kabel werden ausschließlich kraftschlüssig in dem elastischen Formkörper gehalten, was durch die relativ große Kontaktfläche zwischen Kabel und Formkörper auch bei vorgesehenen hohen Haltekräften eine sehr schonende Befestigung der Kabel garantiert. Auf diese Weise wird mittels der Kabeldurchführung eine effektive Zugentlastung realisiert.

Das Montageteil für die Kabeldurchführung wird in der Öffnung für die Durchführung befestigt, wobei die Kombination aus kraft- und formschlüssiger Befestigung auf vorteilhafte Weise zum Einsatz gelangt. Die Festigkeit der kraftschlüssigen Verbindung wird durch Elastizitätsmodul und Geometrie des elastischen Formkörpers in Relation zur Öffnung für die Installation der Durchführung sowie die Lage des durch die schwenkbaren Riegel vorgegebenen Anschlages bestimmt. Spannkräfte, die über die zum Erreichen des Anschlages der Arretierungsplatte erforderlichen Kräfte hinausgehen, bewirken eine hohe Positionsfestigkeit des erfindungsgemäßen Montageteils, das zudem durch formschlüssige Verbindung gegen ein Herausfallen aus der Durchführungsöffnung gesichert ist. Auf diese Weise lässt sich eine Lagestabilität des Montageteils erzielen, die im Wesentlichen nur durch die Bruchfestigkeit der schwenkbaren Riegel und ihrer Befestigung an der Arretierungsplatte begrenzt wird. Damit hält die Kabeldurchführung der Einwirkung hoher Kräfte stand und schirmt konstruktionsbedingt gleichzeitig den Bereich der eigentlichen Kabelbefestigung vor Fremdeinwirkung, etwa durch herabfallende Gegenstände oder anderweitig verursachte Stöße, die zu einer Beeinträchtigung der Dichtwirkung führen könnte, ab.

An einem Ausführungsbeispiel wird ein erfindungsgemäßes Montageteil näher erläutert.

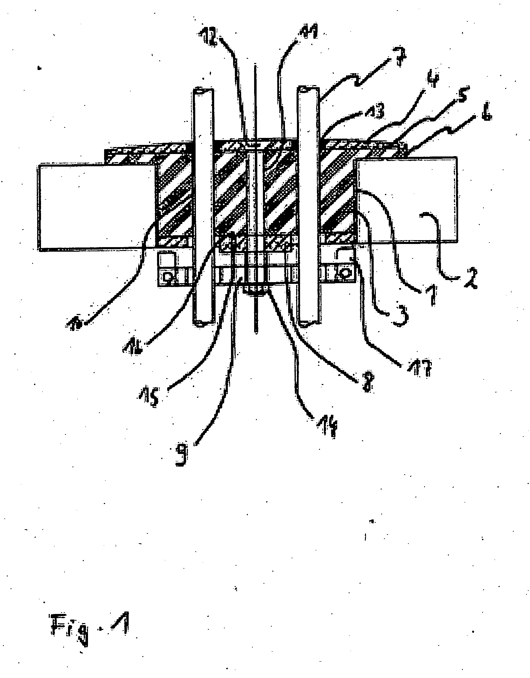

Die zugehörigen Figuren 1 bis 3 zeigen ein derartiges Montageteil in drei aufeinanderfolgen Phasen der Montage.

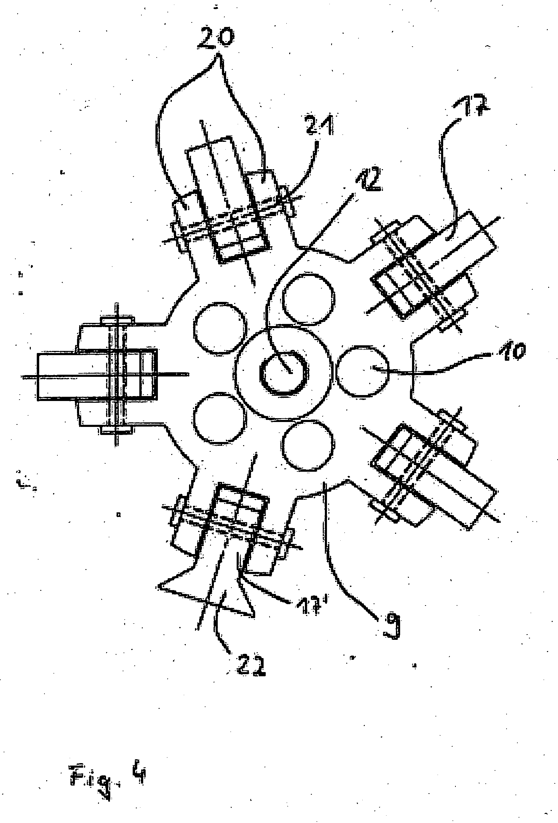

Fig. 4 zeigt eine erfindungsgemäße Arretierungsplatte mit fünf sternförmig angeordneten schwenkbaren Riegeln.

Fig. 1 zeigt ein vollständig in eine Öffnung 1 für eine Installation einer Kabeldurchführung durch eine hintergreifbare feste Fläche 2 eingesetztes erfindungsgemäßes Montageteil im unbefestigten Zustand. Die Öffnung 1 ist als Bohrung im Boden einer Bordküche eines Flugzeuges ausgeführt. Ein weitgehend zylinderförmiger Gummiklotz 3 ist als elastischer Formkörper mit einer oberen kreisförmigen Begrenzungsplatte 4 durch Aufvulkanisieren verbunden. Der Durchmesser des in die Bohrung 1 im Boden der Küche reichenden Teils des Gummiklotzes 3 ist geringfügig kleiner als der Durchmesser der Bohrung 1. Die obere Begrenzungsplatte 4 weist einen Durchmesser auf, der deutlich über dem der Bohrung 1 für die Durchführung liegt. Dadurch ergibt sich im Randbereich der kreisförmigen oberen Begrenzungsplatte 4 ein umlaufender Auflagebereich 5, in dem die obere Begrenzungsplatte 4 gegen den Boden gepresst werden kann. Der Gummiklotz 3 weist im Kontaktbereich zur oberen Begrenzungsplatte 4 eine Verbreiterung 6 auf, die in Form einer elastischen Beilage den Kontakt zwischen der oberen Begrenzungsplatte 4 und der durchbohrten Bodenfläche vermittelt. Dadurch wird bereits während der Montage eine gute Rutschfestigkeit des Montageteils und eine Sicherung gegen ein Verdrehen der durchzuführenden Kabel 7 während des Befestigens erzielt. An der Unterseite des Gummiklotzes 3 befindet sich eine untere Begrenzungsplatte 8, die ebenfalls fest mit dem Gummiklotz 3 verbunden ist. Die Befestigung der beiden Begrenzungsplatten 4, 8 am Gummiklotz kann unter anderem durch Vulkanisieren oder Verkleben erfolgen. Vor der unteren Begrenzungsplatte 8 befindet sich eine Arretierungsplatte 9. Die aus dem mit den Begrenzungsplatten4, 8 verbundenen Gummiklotz 3 und der Arretierungsplatte 9 gebildete Anordnung weist seitlich der Symmetrieachse durchgängige Öffnungen 10 für die Aufnahme der durchzuführenden Kabel 7 und eine zentrale Öffnung als Bohrung 11 für eine Schraube 12 als Spannmittel auf. Vorteilhafterweise sind die Kabel 7 in die Öffnungen 10 im Bereich der oberen Begrenzungsplatte 4 mit einer Vergussmasse 13 eingegossen. Vorteilhafterweise ist der Kopf der Schraube 12 in der oberen Begrenzungsplatte 4 versenkbar, wodurch sich eine leicht zu reinigende Oberfläche des erfindungsgemäßen Montageteils ergibt. Die zentrale Bohrung 11 in der Arretierungsplatte 9 ist mit einem zur Schraube 12 passenden Innengewinde ausgestattet. Dadurch kann durch Anziehen der Schraube 12 der Abstand zwischen der oberen Begrenzungsplatte 4 und der Arretierungsplatte 9 verringert werden. Dabei wirkt die untere Begrenzungsplatte 8 als Distanzstück zwischen der Arretierungsplatte 9 und dem elastischen Gummiklotz 3. Beide Begrenzungsplatten 4, 8 sind massiv ausgeführt. Die untere Begrenzungsplatte 8 weist den gleichen Durchmesser auf, wie der in die Bohrung 1 für die Durchführung einzuführende Teil des Gummiklotzes 3 im entspannten Zustand. Dadurch sorgt die untere Begrenzungsplatte 8 für einen sehr gleichmäßigen Krafteintrag in den elastischen Gummiklötz 3, wenn die Arretierungsplatte 9 durch Anziehen der Schraube 12 gegen die untere Begrenzungsplatte 8 gepresst wird. Dadurch wird gleichzeitig verhindert, dass einzelne Volumenbereiche des Gummiklotzes 3 wesentlich stärker deformiert werden als andere Bereiche. Einer verstärkten Alterung des Gummiklotzes 3 durch eine übermäßige Deformation in einzelnen Bereichen wird auf diese Weise wirksam vorgebeugt. Bei Verringerung des Abstandes zwischen der oberen Begrenzungsplatte 4 und der Arretierungsplatte 9 wird der elastische Gummiklotz 3 zusammengepresst, wodurch sich seine Dicke verringert und sein Querschnitt erhöht. Dadurch wird seine Außenseite fest an die Wand der Bohrung 1 im Boden angepresst. Gleichzeitig entsteht ein Druck im Innern des elastischen Gummiklotzes 3, der dafür sorgt, dass ein fester Kontakt zwischen dem Gummiklotz 3 und den durch ihn hindurchführenden Kabeln 7 und der als Spannmittel wirkenden Schraube 12 entsteht. Auf diese Weise entfaltet der elastische Gummiklotz 3 eine gute Dichtwirkung gegenüber an der Kabeldurchführung anliegenden Fluiden, insbesondere gegenüber im Küchenbetrieb anfallenden Flüssigkeiten. Das nach dem Anziehen der Schraube 12 aus der Arretierungsplatte 9 herausragende Gewindeende ist im vorliegenden Ausführungsbeispiel mit einer selbstsichernden Mutter 14 versehen, wodurch auch im Falle starker Vibrationen ein Lösen der Schraube 12 und damit ein Auseinanderfallen der gesamten Anordnung verhindert wird. Um während des Festziehens der Schraube 12 ein Verdrehen der Arretierungsplatte 9 zu verhindern, ist an der Arretierungsplatte 9 ein Führungsstift 15 angebracht, der in eine Führungsbohrung 16 in der unteren Begrenzungsplatte eingreift. Ist der beim Festziehen der Schraube 12 erfolgende Hub der Arretierungsplatte 9 deutlich größer als die Dicke der unteren Begrenzungsplatte 8 am Ort der Führungsbohrung 16, so kann der Führungsstift in den Gummiklotz 3 hinein gedrückt werden.

Die beiden Begrenzungsplatten 4,8 sind im vorliegenden Beispiel im zentralen Bereich dicker als im peripheren Bereich ausgeführt, was bei relativ geringem Gewicht für eine ausreichende Stabilität sorgt. Die Arretierungsplatte 9 weist Abmessungen auf, die ein einfaches Durchstecken durch die Bohrung 1 für die Kabeldurchführung erlauben. An ihren Außenrändern sind gegenüberliegend zwei schwenkbare Riegel 17 angebracht. Diese sind zwischen zwei Positionen schwenkbar. In einer aufgestellten Position nehmen sie, bezogen auf die Arretierungsplatte 9, eine senkrechte Stellung ein, die das Durchstecken der Arretierungsplatte 9 durch die Bohrung 1 für die Kabeldurchführung nicht behindert. Die andere Position wird derart über einen Anschlag festgelegt, dass die schwenkbaren Riegel 17 in einer ausgeschwenkten Stellung die feste Fläche 2 des Küchenbodens, durch die die Kabeldurchführung erfolgt, hintergreifen. Dadurch wird bei Anziehen der als Spannmittel wirkenden Schraube 12 und der damit verbundenen Verringerung des Abstandes zwischen der Arretierungsplatte 9 und der oberen Begrenzungsplatte 4 ein Endanschlag realisiert, der die Deformation des elastischen Gummiklotzes 3 begrenzt. Eine besonders stabil zu montierende Ausführungsform einer erfindungsgemäßen Kabeldurchführung ergibt sich, wenn drei oder mehr schwenkbare Riegel sternförmig am Rand der Arretierungsplatte angebracht sind.

Die Montage der Kabeldurchführung erfolgt vorzugsweise, indem zuerst die durchzuführenden Kabel 7 durch die dafür vorgesehenen Öffnungen 10 in der vormontierten Anordnung aus elastischem Gummiklotz 3, Begrenzungsplatten 4,8 und Arretierungsplatte 9, also dem erfindungsgemäßen Montageteil, gesteckt werden und anschließend ein Verschieben des Montageteils entlang der Kabel 7 erfolgt, bis das gesamte Montageteil so weit in die vorbereitete Öffnung 1 für die Kabeldurchführung eingeführt ist, dass die obere Begrenzungsplatte 4 flächig auf dem Rand der Bohrung 1 aufliegt. Das erfolgt mit senkrecht aufgestellten schwenkbaren Riegeln 17. Die Arretierungsplatte 9 muss dabei durch vorherige Justierung mittels der Schraube 12 eine Position einnehmen, dass sie bei Anliegen der oberen Begrenzungsplatte 4 auf dem Rand der Bohrung 1 diese Bohrung 1 vollständig passiert hat und sich in einem Abstand vor der Bohrung 1 befindet, der ein Abschwenken der schwenkbaren Riegel 17 ermöglicht.

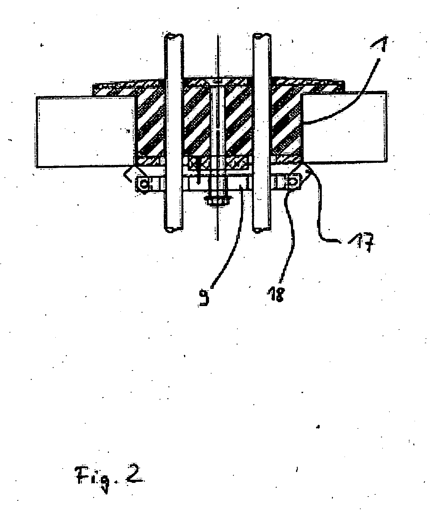

Fig. 2 zeigt ein erfindungsgemäßes Montageteil während des Abschwenkens der schwenkbaren Riegel 17 in Form einer fallenden Arretierung in die durch einen Anschlag 18 bestimmte Position, in der sie für ein Hintergreifen der durchbohrten Bodenfläche sorgen. Das Abschwenken kann beispielsweise durch bloßes Fallen nach einer kurzen Drehbewegung des Montageteils erfolgen. In einer besonders komfortabel zu montierenden Ausführungsform befinden sich die schwenkbaren Riegel 17 grundsätzlich in der abgeschwenkten Position. Lediglich beim Durchstecken des Montageteiles durch die Bohrung 1 für die Kabeldurchführung erfolgt entgegen einer Federkraft ein Aufrichten der schwenkbaren Riegel, um das Einführen des Montageteils zu ermöglichen. Wenn die Arretierungsplatte 9 sich nach Einführen des Montageteils in einem ausreichend großen Abstand unter der Bodenfläche befindet, erfolgt durch die Federkraft automatisch ein erneutes Abschwenken in die Arretierungsposition.

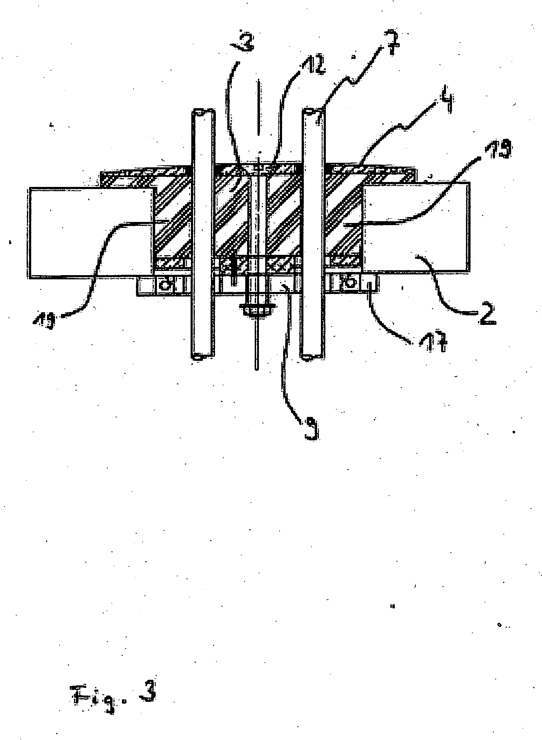

Fig. 3 zeigt ein erfindungsgemäßes Montageteil für eine flüssigkeitsdichte Kabeldurchführung im fertig montierten Zustand. Die obere Begrenzungsplatte 4 und die an der Arretierungsplatte 9 angebrachten schwenkbaren Riegel 17 befinden sich in festem Kontakt mit der Bodenfläche 2 der Küche. Durch die Verringerung des Abstandes zwischen der oberen Begrenzungsplatte 4 und der Arretierungsplatte 9 hat sich der Querschnitt des elastischen Gummiklotzes 3 vergrößert, was durch eine entsprechende Ausbauchung 19 dargestellt ist. Dadurch wird seine Außenseite fest an die Wand der Bohrung 1 im Boden angepresst. Gleichzeitig herrscht ein ausreichender Druck im Innern des elastischen Gummiklotzes 3, der dafür sorgt, dass ein fester Kontakt zwischen dem Gummiklotz 3 und den durch ihn hindurchführenden Kabeln 7 und der als Spannmittel wirkenden Schraube 12 besteht, wodurch die gesamte Kabeldurchführung flüssigkeitsdicht ist.

Fig. 4 zeigt die Untersicht einer erfindungsgemäßen Arretierungsplatte 9 mit fünf sternförmig angeordneten schwenkbaren Riegeln 17 in abgeschwenkter Position. Durch die symmetrische Anordnung und die größere Zahl der schwenkbaren Riegel 17 ergibt sich eine besonders hohe Stabilität der fertig montierten Kabeldurchführung. Die Arretierungsplatte 9 weist einen runden zentralen Bereich auf, aus dem seitlich paarweise Befestigungsschenkel 20 ragen, die der Befestigung der schwenkbaren Riegel 17 dienen. Die Befestigung der schwenkbaren Riegel 17 an der Arretierungsplatte 9 ist durch jeweils einen Bolzen 21 realisiert, der durch jeweils ein Paar Befestigungsschenkel 20 und einen zugehörigen schwenkbaren Riegel 17 führt. Die dargestellte Arretierungsplatte 9 gehört zu einem erfindungsgemäßen Montageteil für eine flüssigkeitsdichte Kabeldurchführung für fünf Kabel, erkennbar an den symmetrisch um die mit einer selbstsichernden Mutter versehenen Schraube 12 angeordneten Bohrungen 10. Die schwenkbaren Riegel 17 können unterschiedlich geformt sein. Teile der Riegel 17, die im Befestigungsfall mit der zu hintergreifenden Fläche in Kontakt kommen, können auf vielfältige Weise an Materialien, aus denen diese Fläche besteht, angepasst werden. Der schwenkbare Riegel 17' weist beispielsweise einen deutlich vergrößerten Auflagebereich 22 auf, was ein materialschonendes Befestigen des Montageteiles ermöglicht.

### Bezugszeichenliste

- 1: Öffnung/Bohrung für die Installation der Kabeldurchführung
- 2: hintergreifbare feste Fläche (Küchenboden)
- 3: Formkörper aus elastischem Material (Gummiklotz)
- 4: obere Begrenzungsplatte
- 5: umlaufender Auflagebereich
- 6: Verbreiterung des Gummiklotzes
- 7: Kabel
- 8: untere Begrenzungsplatte
- 9: Arretierungsplatte
- 10: Öffnungen/Bohrungen zur Aufnahme der Kabel
- 11: zentrale Öffnung/Bohrung
- 12: Schraube
- 13: Vergussmasse
- 14: selbstsichernde Mutter
- 15: Führungsstift
- 16: Führungsbohrung
- 17: schwenkbare Riegel
- 18: Anschlag
- 19: Ausbauchung
- 20: Befestigungsschenkel
- 21: Bolzen
- 22: Auflagebereich des schwenkbaren Riegels

## Patentansprüche

1. Montageteil für eine flüssigkeitsdichte Kabeldurchführung durch eine Öffnung (1) in einer hintergreifbaren festen Fläche (2), umfassend
eine die Öffnung (1) abdeckende obere Begrenzungsplatte (4),
einen mit der oberen Begrenzungsplatte (4) verbundenen und in flächigem Kontakt stehenden zumindest teilweise in die Öffnung (1) einführbaren elastischen Formkörper (3),
eine durch die Öffnung (1) führbare, auf der gegenüber der oberen Begrenzungsplatte (4) liegenden Seite des elastischen Formkörpers (3) mit dem elastischen Formkörper (3) verbundene und mit diesem in flächigem Kontakt stehende untere Begrenzungsplatte (8),
mindestens ein Spannmittel,
**dadurch gekennzeichnet, dass** das Montageteil weiterhin aufweist:
eine gegen die untere Begrenzungsplatte (8) bewegbare Arretierungsplatte (9) mit mindestens zwei schwenkbaren Riegeln (17), die zwischen paarweise angeordneten Befestigungsschenkeln (20) mittels eines Bolzens (22) gelagert sind und zwischen einer Position, die ein Durchführen der Arretierungsplatte (9) durch die Öffnung (1) gestattet und
einer Anschlagsposition, die ein Hintergreifen der festen Fläche (2) ermöglicht, bewegt werden können,
wobei das mindestens eine Spannmittel zur Einstellung des Abstandes zwischen der oberen Begrenzungsplatte (4) und der Arretierungsplatte (9) entgegen bei Deformation des elastischen Formkörpers auftretenden Kräften ausgeführt ist, und
mindestens eine durch die Arretierungsplatte (9), die Begrenzungsplatten (4, 8) und den elastischen Formkörper (3) führende Öffnung (10) zur Aufnahme eines durch die feste Fläche (2) durchzuführenden Kabels (7).

2. Montageteil nach Anspruch 1, **dadurch gekennzeichnet, dass** die Arretierungsplatte (9) mindesten drei sternförmig angeordnete schwenkbare Riegel (17) aufweist.

3. Montageteil nach Anspruch 1, **dadurch gekennzeichnet, dass** die Arretierungsplatte (9) fünf sternförmig angeordnete schwenkbare Riegel (17) aufweist.

4. Montageteil nach einem der Ansprüche 1 bis 3, **dadurch gekennzeichnet, dass** der elastische Formkörper (3) ein zylinderförmiger Gummiklotz ist, der vollständig in die Öffnung (1) in der hintergreifbaren Fläche (2) einführbar ist.

5. Montageteil nach einem der Ansprüche 1 bis 3, **dadurch gekennzeichnet, dass** der elastische Formkörper (3) ein Gummiklotz ist, der einen zylinderförmigen Teil, der in die Öffnung in der hintergreifbaren Fläche (2) einführbar ist und einen verbreiterten Teil (6), der auf dem Rand der Öffnung (1) aufliegt, aufweist.

6. Montageteil nach einem der Ansprüche 1 bis 5, **dadurch gekennzeichnet, dass** mehrere durch die Arretierungsplatte (9), die Begrenzungsplatten (4, 8) und den elastischen Formkörper (3) führende Öffnungen (10) zur Aufnahme jeweils eines durch die feste Fläche durchzuführenden Kabels (7) enthalten sind.

7. Montageteil nach einem der Ansprüche 1 bis 5, **dadurch gekennzeichnet, dass** fünf durch die Arretierungsplatte (9), die Begrenzungsplatten (4, 8) und den elastischen Formkörper (3) führende Öffnungen (10) zur Aufnahme jeweils eines durch die feste Fläche durchzuführenden Kabels (7) enthalten sind.

8. Montageteil nach einem der Ansprüche 1 bis 7, **dadurch gekennzeichnet, dass** das Spannmittel zur Einstellung des Abstandes zwischen der oberen Begrenzungsplatte (4) und der Arretierungsplatte (9) eine Schraube (12) umfasst, die durch eine zentrale Öffnung (11) durch die Arretierungsplatte (9), die Begrenzungsplatten (4, 8) und den elastischen Formkörper (3) führt.

9. Montageteil nach Anspruch 8, **dadurch gekennzeichnet, das** die Schraube (12) mit einem Innengewinde in der Arretierungsplatte (9) in Eingriff steht.

10. Montageteil nach Anspruch 8, **dadurch gekennzeichnet, das** die Schraube (12) mit einer selbstsichernden Mutter (14) gesichert ist.

11. Montageteil nach einem der Ansprüche 1 bis 10, **dadurch gekennzeichnet, dass** die Arretierungsplatte (9) mit einen Führungsstift (15) verbunden ist, der in einer Führungsbohrung (16) in der unteren Begrenzungsplatte (8) bewegbar ist.

12. Montageteil nach einem der Ansprüche 1 bis 11, **dadurch gekennzeichnet, dass** die schwenkbaren Riegel (17) so gelagert sind, dass die Anschlagsposition der schwenkbaren Riegel (17), die ein Hintergreifen der festen Fläche (2) ermöglicht, nur entgegen einer elastischen Rückstellkraft verlassen werden kann.

13. Montageteil nach einem der Ansprüche 4 bis 12, **dadurch gekennzeichnet, dass** der Durchmesser des zylindrischen Teils des Gummiklotzes im entspannten Zustand kleiner als der Durchmesser der Öffnung (1) in der hintergreifbaren festen Fläche (2) ist.

14. Montageteil nach einem der Ansprüche 1 bis 13, **dadurch gekennzeichnet, dass** die Öffnungen (10) zur Aufnahme der durchzuführenden Kabel (7) im Bereich der oberen Begrenzungsplatte (4) so dimensioniert sind, dass sie ein zum Vergießen der durchgeführten Kabel (7) erforderliches Volumen an Vergussmasse (13) aufnehmen können.

## Claims

1. A fitting for a liquid-tight cable leadthrough in an opening (1) in a solid surface (2), which can be gripped from the back, the fitting comprising:
an upper boundary plate (4) covering the opening (1),
an elastic moulded element (3), which flatly contacts and is connected to the upper boundary plate (4) and is at least partially insertable into the opening (1),
a lower boundary plate (8) leadable through the opening (1), wherein the lower boundary plate flatly contacts and is connected to the elastic moulded element (3) on the opposite side of the elastic moulded element (3) referred to the upper boundary plate (4),
at least one clamping element,
**characterized in that** the fitting further comprises:
a locking plate (9) movable relative to the lower boundary plate (8), the locking plate is provided with at least two pivotable locking elements (17), wherein the locking elements are mounted between pairs of mounting limbs (20) by element of a bolt (22), and are movable between a position in which the locking plate (9) is leadable through the opening (1) and a stopping position which enables a gripping from the back of the solid surface (2),
wherein the at least one clamping element is operable for adjusting the spacing between the upper boundary plate (4) and the locking plate (9) against forces generated during a deformation of the elastic moulded element, and
at least one opening (10) for accommodating a cable (7) to be lead through the solid surface (2), wherein the at least one opening (10) extends through the locking plate (9), the boundary plates (4, 8) and the elastic moulded element (3).

2. The fitting of claim 1, **characterized in that** the locking plate (9) comprises at least three pivotable locking elements (17) that are arranged in a star configuration.

3. The fitting of claim 1, **characterized in that** the locking plate (9) comprises five pivotable locking elements (17) that are arranged in a star configuration.

4. The fitting of any one of claims 1 to 3, **characterized in that** the elastic moulded element (3) is a cylindrical rubber block that can be completely inserted into the opening (1) in the solid surface (2) which can be gripped from the back.

5. The fitting of any one of claims 1 to 3, **characterized in that** the elastic moulded element (3) is a rubber block with a cylindrical section that can be inserted into the opening (1) in the solid surface (2) which can be gripped from the back, and with a widened section (6) that is supported on the edge of the opening (1).

6. The fitting of any one of claims 1 to 5, **characterized in that** several openings (10) extending through the locking plate (9), the boundary plates (4, 8) and the elastic moulded element (3) are provided for respectively accommodating a cable (7) to be lead through the solid surface.

7. The fitting of any one of claims 1 to 5, **characterized in that** five openings (10) extending through the locking plate (9), the boundary plates (4, 8) and the elastic moulded element (3) are provided for respectively accommodating a cable (7) to be lead through the solid surface.

8. The fitting of any one of claims 1 to 7, **characterized in that** the clamping element for adjusting the distance between the upper boundary plate (4) and the locking plate (9) comprises a screw (12) that extends through a central opening (11) in the locking plate (9), the boundary plates (4, 8) and the elastic moulded element (3).

9. The fitting of claim 8, **characterized in that** the screw (12) is engaged with a female thread in the locking plate (9).

10. The fitting of claim 8, **characterized in that** the screw (12) is secured with a self-locking nut (14).

11. The fitting of any one of claims 1 to 10, **characterized in that** the locking plate (9) is connected to a guide pin (15) that is movable in a guide bore (16) in the lower boundary plate (8).

12. The fitting of any one of claims 1 to 11, **characterized in that** the pivotable locking elements (17) are supported in such a way that the stopping position of the pivotable locking elements (17), which stopping position enables that the solid surface (2) can be gripped from the back, can only be vacated against an elastic restoring force.

13. The fitting of any one of claims 4 to 12, **characterized in that** the diameter of the cylindrical section of the rubber block is smaller in the relaxed state than the diameter of the opening (1) in the solid surface (2) which can be gripped from the back.

14. The fitting of any one of claims 1 to 13, **characterized in that** the openings (10) for accommodating the cables (7) to be lead trough, have such dimensions in the region of the upper boundary plate (4) that they are able to accommodate a casting compound (13) volume required for sealing the lead through cables (7).

## Revendications

1. Pièce de montage pour une traversée de câbles étanche aux fluides au travers d'une ouverture (1) dans une surface (2) fixe pouvant être enserrée, comprenant
une plaque de délimitation supérieure (4) recouvrant l'ouverture (1),
un corps moulé élastique (3), assemblé avec la plaque de délimitation supérieure (4) et pouvant être introduit en contact plan, au moins en partie, dans l'ouverture (1),
une plaque de délimitation inférieure (8) pouvant être guidée au travers de l'ouverture (1), assemblée avec le corps moulé élastique (3) sur le côté de ce dernier situé en vis-à-vis de la plaque de délimitation supérieure (4) et en contact plan avec ce corps moulé,
au moins un moyen de serrage,
**caractérisée en ce que** la pièce de montage présente en outre :
une plaque d'arrêt (9), pouvant être déplacée contre la plaque de délimitation inférieure (8), avec au moins deux verrous pivotants (17), qui sont montés entre des branches de fixation (20) disposées par paires au moyen d'un axe (22) et peuvent être déplacés entre une position, qui autorise un passage de la plaque d'arrêt (9) au travers de l'ouverture (1) et une position de butée, qui permet d'enserrer la surface fixe (2),
le au moins un moyen de serrage étant réalisé pour le réglage de la distance entre la plaque de délimitation supérieure (4) et la plaque d'arrêt (9) contre des forces produites lors de la déformation du corps moulé élastique, et
au moins une ouverture (10), menant au travers de la plaque d'arrêt (9), des plaques de délimitation (4, 8) et du corps moulé élastique (3), étant prévue pour recevoir un câble de traversée (7) de la surface fixe (2).

2. Pièce de montage suivant la revendication 1, **caractérisée en ce que** la plaque d'arrêt (9) présente au moins trois verrous pivotants (17) disposés en forme d'étoile.

3. Pièce de montage suivant la revendication 1, **caractérisée en ce que** la plaque d'arrêt (9) présente cinq verrous pivotants (17) disposés en forme d'étoile.

4. Pièce de montage suivant l'une des revendications 1 à 3, **caractérisée en ce que** le corps moulé élastique (3) est un bloc de caoutchouc cylindrique, qui peut être introduit totalement dans l'ouverture (1) de la surface (2) pouvant être enserrée.

5. Pièce de montage suivant l'une des revendications 1 à 3, **caractérisée en ce que** le corps moulé élastique (3) est un bloc de caoutchouc pourvu d'une partie cylindrique, qui peut être introduite dans l'ouverture de la surface (2) pouvant être enserrée, et d'une partie élargie (6), qui s'applique sur le bord de l'ouverture (1).

6. Pièce de montage suivant l'une des revendications 1 à 5, **caractérisée en ce que** plusieurs ouvertures (10), menant au travers de la plaque d'arrêt (9), des plaques de délimitation (4, 8) et du corps moulé élastique (3), sont prévues pour recevoir chacune un câble (7) de traversée de la surface fixe.

7. Pièce de montage suivant l'une des revendications 1 à 5, **caractérisée en ce que** cinq ouvertures (10), menant au travers de la plaque d'arrêt (9), des plaques de délimitation (4, 8) et du corps moulé élastique (3), sont prévues pour recevoir chacune un câble (7) de traversée de la surface fixe.

8. Pièce de montage suivant l'une des revendications 1 à 7, **caractérisée en ce que** le moyen de serrage pour le réglage de la distance entre la plaque de délimitation supérieure (4) et la plaque d'arrêt (9) comprend une vis (12), qui mène au travers d'une ouverture centrale (11) de la plaque d'arrêt (9), des plaques de délimitation (4, 8) et du corps moulé élastique (3).

9. Pièce de montage suivant la revendication 8, **caractérisée en ce que** la vis (12) est en prise avec un taraudage de la plaque d'arrêt (9).

10. Pièce de montage suivant la revendication 8, **caractérisée en ce que** la vis (12) est bloquée par un écrou (14) autobloquant.

11. Pièce de montage suivant l'une des revendications 1 à 10, **caractérisée en ce que** la plaque d'arrêt (9) est assemblée avec une goupille de guidage (15), mobile dans un trou de guidage (16) de la plaque de délimitation inférieure (8).

12. Pièce de montage suivant l'une des revendications 1 à 11, **caractérisée en ce que** les verrous pivotants (17) sont montés de sorte que la position de butée des verrous pivotants (17), qui permet d'enserrer la surface fixe (2), ne peut être quittée que contre une force de rappel élastique.

13. Pièce de montage suivant l'une des revendications 4 à 12, **caractérisée en ce que** le diamètre de la partie cylindrique du bloc de caoutchouc est plus petit, dans l'état de détente, que le diamètre de l'ouverture (1) de la surface fixe (2) pouvant être enserrée.

14. Pièce de montage suivant l'une des revendications 1 à 13, **caractérisée en ce que** les ouvertures (10), destinées à recevoir les câbles de traversée (7), sont dimensionnées dans la zone de la plaque de délimitation supérieure (4) de sorte qu'elles peuvent recevoir un volume de compound (13), requis pour le scellement des câbles de traversée (7).
